# EUROPEAN PATENT APPLICATION

(11) **EP 1 188 935 A2**
(43) Date of publication of application: **20.03.2002**
(21) Application number: 01307278.0
(22) Date of filing: 24.08.2001
(51) Int. Cl.: F15D 1/02, F17D 1/00

(54) **Flow conditioner for wet gas**

(30) Priority: 15.09.2000 US 663820
(71) Applicant: DANIEL INDUSTRIES, INC.,, Houston, TX 77055 (US)
(72) Inventor: Zanker, Klaus, Houston, Texas 77057 (US); Derr, Charles, Spring, Texas 77379 (US)
(74) Representative: Holmes, Matthew Peter

(57) **Abstract**

A flow conditioner (400) designed for contaminated gas flow includes a number of perforations. At least one of these perforations (458) intersects a pitch diameter (460) on the flow conditioner that equals the diameter of the pipeline the flow conditioner is intended to be inserted in. The provision of holes (458) at the pipeline diameter (460) allows the flow conditioner to pass both one-phase and contaminated flow without affecting the measurement accuracy of an associated flow meter.

## Description

### CROSS-REFERENCE TO RELATED APPLICATIONS

Not Applicable.

### STATEMENT REGARDING FEDERALLY SPONSORED RESEARCH OR DEVELOPMENT

Not Applicable.

### BACKGROUND OF THE INVENTION

In pipeline operations and other industrial applications, flow meters must be capable of accurately measuring the flow rate of gases or liquids moving through piping or tubing systems. In natural gas pipelines, for example, these flow rate measurements may be relied upon for custody transfer, leak detection, control, or for other indications.

For custody transfer operations, the meter is the point where custody transfer occurs, such as when gas is delivered into or out of a pipeline system through the meter as it measures the passing flow rate. By accurately measuring the flow rate for a given time period, the volume of gas that passes through the meter can be determined, and a custody transfer volume ticket can then be prepared. The pipeline transportation fee is based on the volume of product moved through the system, *i.e*. the custody transfer volume. Thus, a custody transfer metering system is commonly referred to in the pipeline industry as the "cash register," and pipeline operators take great care to maintain its measurement accuracy.

Concentric orifice meters are one type of flow meter used to measure the flow of fluid through a pipeline. More recently, ultrasonic flow meters have been introduced that use ultrasonic signals to detect the flow velocity of fluid (*i.e*. liquid or gas) moving through a pipeline. All flow meters, however, must be accurate, and all flow meters are subject to the undesirable effects of flow disturbances in the moving gas or liquid.

The three main types of flow distortion have been identified as axisymmetric, asymmetric, and swirl. For example, reduction and expansion in a straight pipe usually gives axisymmetric distortions, whereas bends and valves tend to cause asymmetric flow, often accompanied by swirl. These disturbances are troublesome because the meter calibration factors or empirical coefficients calculated from the discharge coefficient equations are valid only if similarity exists between the metering installation and the experimental data base. These factors or coefficients should not be significantly different from those at the time of meter calibration, or from those which existed in the empirical coefficients of discharge data base. In other words, where a flow meter is not calibrated in conjunction with a particular flow conditioner, the flow meter is calibrated with fully developed flow. Consequently, these flow meter measurements are valid only if fully developed flow conditions exist. Further, even where the flow meter is calibrated in conjunction with a particular design of flow conditioner, and so measurements by the flow meter can be calibrated to that flow conditioner's particular effect on fluid flow, it is desirable for the flow conditioner to provide a fully developed flow in a pipe. This is because fully developed flow is the only stable flow. Thus, inevitable variations that occur during manufacture of a flow conditioner, and variations in the distance between a flow conditioner and a corresponding flow meter, are less likely to affect measurements by the flow meter.

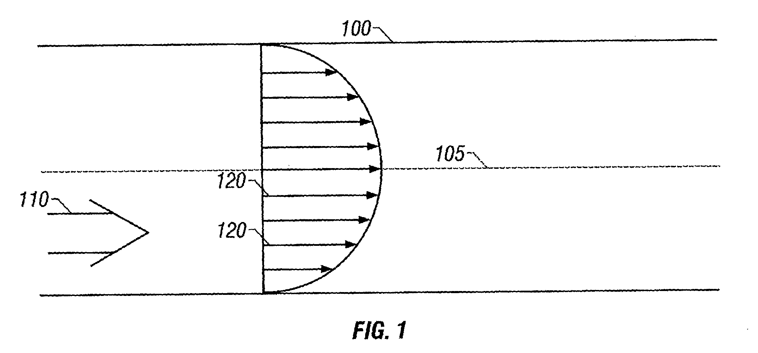

In layman's terms, a fully developed flow condition is similar to that shown in Figure 1 (not to scale). A pipeline 100 carries a moving column of gas 110. Velocity vectors (generally labeled at 120) indicate that the gas velocity through pipeline 100 increases as centerline 105 of pipeline 100 is approached. The shape of the velocity profile reflects the friction and resistance of the wall of the pipeline. The classical definition for fully developed turbulent flow is stated by *Hinze* as the mean-flow conditions being independent of the axial coordinate, x, and axisymmetric, assuming a uniform wall condition.

A sufficiently long section of straight pipe results in a gas stream having a fully developed flow (or nearly fully developed flow). Thus, to avoid unwanted shifts in meter calibration factors, minimum distances are recommended upstream of a flow meter installation. The exact minimum distance varies between 50 and 100 times the diameter of the pipe, depending on the nature of any upstream disturbances and the type of flow meter being used. This can be both inconvenient and expensive, particularly for the larger pipe sizes and for situations where space is at a premium (such as the North Sea oil platforms).

To shorten the length of pipe required, a flow conditioner can be inserted into the pipe upstream of the meter to correct the flow profile. Although the ideal flow profile produced by a flow conditioner would provide a perfect match in terms of time mean velocity profile, turbulence profile, and axisymmetry, and would also be swirl free regardless of upstream distortion, flow conditioners are generally acceptable when they meet the specifications provided by International Standard Organization (ISO). ISO 5167 (developed for orifice plates) requires the flow to be within ±5% of the fully developed flow profile and to have a swirl angle of less than 2°. Other features of a good flow conditioner include a low pressure loss across the device, a low fouling rate, a short operating length between the conditioner and any source of flow distortion, a short length of the conditioner itself, a short settling length downstream of the conditioner, adequate robustness, and a simple and inexpensive manufacture. Ease of installation is also desirable.

Although different authors classify various flow conditioners somewhat differently, flow conditioners may be grouped into three general classes: 1) turbulent mixing devices; 2) vortex action devices; 3) hybrid flow conditioners. Turbulent mixing devices create individual jets of fluid, resulting in high localized peaks in both turbulence and velocity that decay rapidly with distance downstream of the conditioner. Turbulent mixing devices include perforated plates and reduce flow distortions. Vortex action devices include cellular passages that create a vortex action that reduces swirl. Vortex action devices include etoile, tube bundles, and honeycomb flow conditioners. Hybrid flow conditioners combine the features of both turbulent mixing devices and vortex action devices. Hybrid flow conditioners include the Zanker flow conditioner and the Gallagher flow conditioner.

These flow conditioners are meant to improve the performance of flow meters by shortening the amount of straight upstream pipe required to achieve a fully-developed or nearly fully-developed flow. There are those in the flow metering industry who believe that in addition to improving the performance of the flow meter by shortening the necessary amount of straight pipe, a good flow conditioner will enhance the accuracy of the flow measurements by providing a more predictable flow distribution to the flow meter. Thus, flow conditioners are now often marketed as accuracy enhancement devices, desirable even if an adequate length of straight upstream pipe is present.

The classical definition of fully developed flow defines fully developed flow with reference to the average, or mean, flow conditions. In reality, this means that there may be variation in the turbulent flow of 5-10%, and this variation can introduce errors into a flow measurement even where fully developed flow is present. Depending on its size, the "measurement uncertainty" of a testing facility can range from about 0.25% to 0.4% or more. By placing a flow conditioner close to (but a set distance away from) a flow meter, and by calibrating both the flow conditioner and the flow meter jointly, the measurement uncertainty of the combined meter may be reduced (from 0.4% to 0.3%, for example). This is believed to result from the proximity of the flow conditioner to the flow meter, with the accompanying localized control by the flow conditioner. Of course, any improvement to measurement accuracy is highly desirable in view of the enormous amount of potentially valuable hydrocarbons flowing through the pipeline.

One drawback of prior art flow conditioners, however, is that they are generally designed for only single phase fluids such as an all-liquid or an all-gas stream. This assumes a clean, dry gas or pure liquid. But clean gas and pure liquid exist only in the mind of the designer. In the real world, various contaminants such as compressor oil, grease from valves, glycol, methanol, condensate, water, pipe scale (rust), sand, or other particulates pollute the one-phase fluid in the pipeline. Even a small fraction of contaminants results in a pound or more of contaminant flowing through a flow meter daily because such large amounts of the desirable gas or liquid are being transported. Thus, the actual flow through the pipeline is a contaminated flow, with these contaminants introducing complications to the measurement of the fluid flow. For example, it has not been widely appreciated that if a small but significant amount of stratified liquid is present in a large quantity of travelling gas, such as with wet gas, the liquid will collect or dam up in front of the flow conditioner.

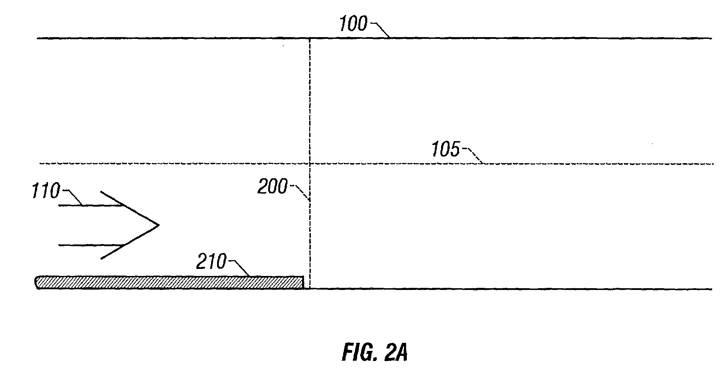

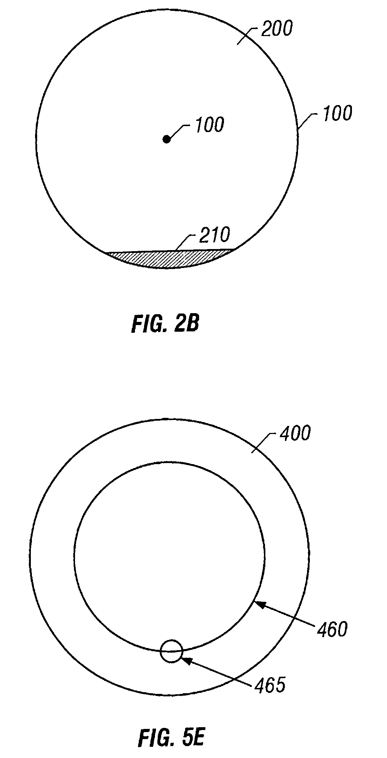

Figures 2A and 2B includes a pipeline 100 with centerline 105 carrying a flowing quantity of wet gas 110. A flow conditioner 200 having a plate with holes obstructs the flow of liquid 210 at the bottom of the pipe. Eventually, the stratified flow builds and the geometries of the effective pipline and flow conditioner are no longer circular. Eventually, the lip of the perforations in the flow conditioner 200 becomes a weir over which the liquid cascades. One way in which flow conditioning is affected is that designers of flow conditioners assume a full diameter pipeline for the fluid flow. A build-up of contaminants alters this design assumption. In addition, similar to the pipeline wall, the pool 210 of dammed-up liquid upstream of the flow conditioner affects the velocity profile of the flowing gas by frictional interaction with the flow of the adjacent gas. This slows the flowing gas near the pool 210, and thus slows the gas flowing into the lower region of the flow conditioner 200. The friction between the flowing gas and the pooled liquid also creates eddies and disruptions in the gas. Because the dammed pool of liquid is against the flow conditioner, the effect from the changes in effective pipeline and flow conditioner geometeries and the interaction between the liquid pool and the flowing gas can be large, negating any improvement in measurement uncertainty provided by the flow conditioner. Further, because it is the surface of the pool 210 that interacts with the adjacent flowing gas, even a very shallow pool of liquid can cause a serious disruption to the gas flow. Consequently, although the flow conditioner may be marketed as a device that will improve measurement accuracy and reduce measurement uncertainty, in actuality improvements in measurement accuracy may not be achieved. In fact, rather than reducing measurement uncertainty, greater measurement uncertainty may be present for contaminated flow than if no flow conditioner was used at all.

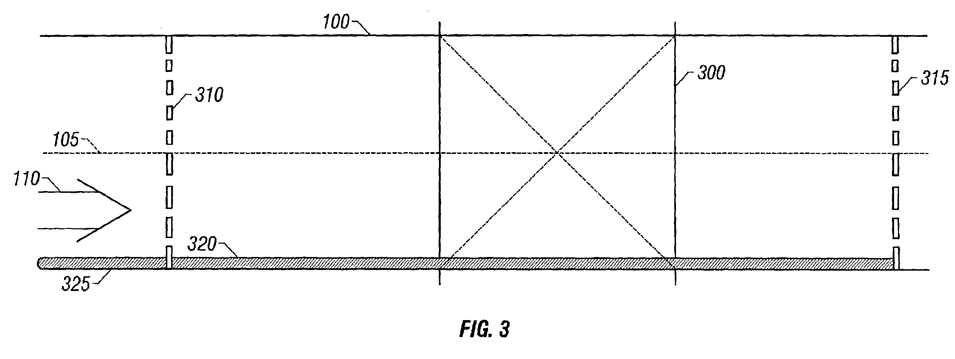

Other arrangements of flow meters and flow conditioners introduce even greater error to the flow measurements. Figure 3 includes a pipeline 100 with centerline 105 and two flow conditioners 310, 315 on either side of a flow meter 300. A pool of liquid 320 occupies the bottom of the pipeline 100 between the two flow conditioners 310, 315, and another pool of liquid 325 occupies the bottom of the pipeline upstream of flow conditioner 310. The use of two flow conditioners 310, 315, one upstream of the flow conditioner 310 and one downstream, is appropriate for a bi-directional flow meter 300 such as ultrasonic meter.

As discussed above, the pool of liquid 325 in front of flow conditioner 310 introduces errors into the flow meter measurements. Moreover, when liquid is in the flowing gas, it may become trapped between the two conditioners 310, 315, forming pool 320. A pool of liquid 320 occupying the area in the pipeline or spoolpiece that holds the flow meter 300 results in a pipe with a smaller effective cross-section at the point of flow measurement. Because calculations of fluid flow presume a full-size pipe, the pool 320 of liquid between the two flow conditioners 310, 315 consistently results in an erroneous measurement of the amount of fluid flowing through the pipe. The further the holes in the plate are from the pipeline wall, the larger the error will be. This consistent error is particularly troublesome because over time it will compound into an even larger error, with the value of the fluid in the pipeline making large errors extremely undesirable. The same phenomenon happens at the top of the pipeline when it is primarily liquid flowing through the pipeline and gas is trapped against the inner roof of the pipeline between two positioned flow conditioners.

A flow conditioner is therefore needed that is capable of reducing or eliminating the error that results from a contaminated flow. Ideally, this flow conditioner would be as effective as known flow conditioners, but would not be subject to the difficulties of stratified flow build up in the pipeline.

### SUMMARY OF THE INVENTION

A first embodiment of the invention is a flow conditioner suitable for insertion into a pipeline, the flow conditioner including a plate having a face, a center point, and a pipeline pitch diameter that matches the diameter of the pipeline. Holes in the face of the plate are suitable to accommodate the flow of fluid through the plate, and at least one of the plurality of holes intersects the pipeline pitch diameter. For example, the hole may tangentially touch the pipeline pitch diameter. Other holes in the flow conditioner may be located at different pitch diameters. Further, the holes may be circular, a portion of a circle, or some other shape.

A second embodiment of the invention is a method of installing a flow conditioner in a pipeline, comprising positioning the flow conditioner in the pipeline, the flow conditioner having at least one hole that intersects the pipeline diameter, and rotating the flow conditioner to place the hole or holes at the pipeline diameter at a desired angular location. Of course, the rotating step may be executed prior to the positioning step as well.

The various characteristics described above, as well as other features, will be readily apparent to those skilled in the art upon reading the following detailed description of the preferred embodiments of the invention, and by referring to the accompanying drawings.

### BRIEF DESCRIPTION OF THE DRAWINGS

For a more detailed description of the preferred embodiment of the present invention, reference will now be made to the accompanying drawings, wherein:
Figure 1 is a cross-section of a moving column of fluid;
Figure 2A and 2B are cross-sections of a contaminated flow of fluid against a flow conditioner;
Figure 3 is a cross-section of a contaminated flow of fluid trapped between two flow conditioners;
Figure 4 is a front view of a perforated plate according to a first embodiment of the invention;
Figures 5A-5E are schematic front views of a plate according to the first embodiment with holes at various angular and radial positions;
Figure 6 is a isometric view of a Zanker flow conditioner;
Figure 7 is a front view of a Zanker flow conditioner; and
Figure 8 is a front view of a modified Gallagher flow conditioner.

### DETAILED DESCRIPTION OF THE PREFERRED EMBODIMENT

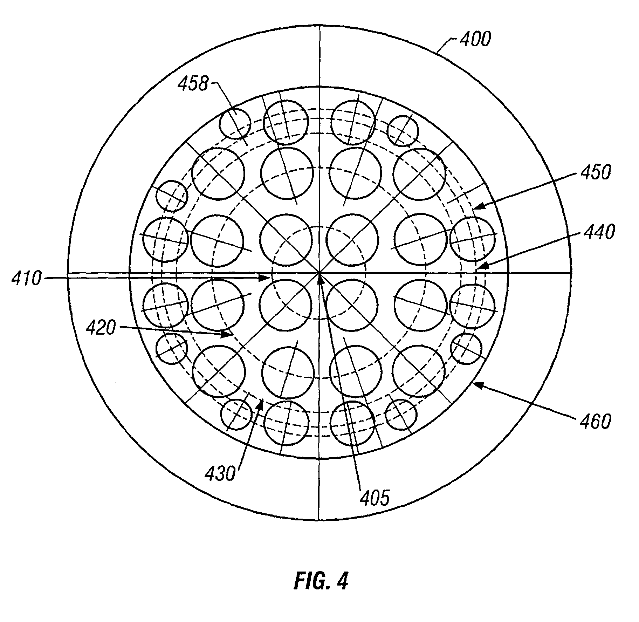

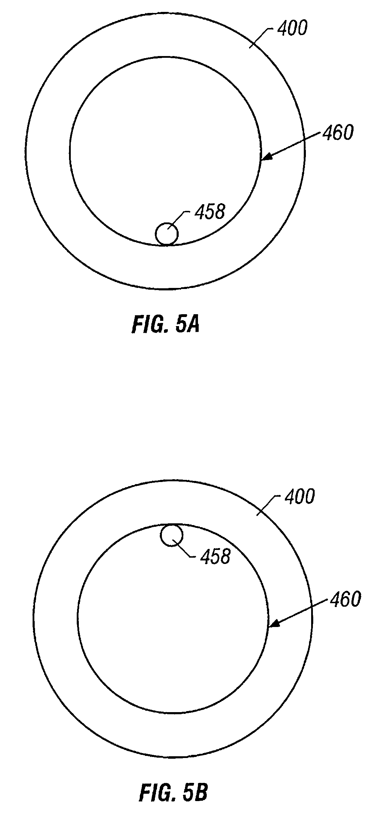

Figure 4 is a first embodiment of a flow conditioner according to the invention. A plate 400 is designed for insertion into a pipeline 100. It includes a center point 405, a first pitch diameter 410 spaced a first distance from center point 405, a second pitch diameter 420 at a second distance, a third pitch diameter 430 at a third distance, a fourth pitch diameter 440 at a fourth distance, and a fifth pitch diameter 450 at a fifth distance. Each pitch diameter corresponds to a different array of perforations or holes that extend through the plate 400. In particular, first pitch diameter 410 intersects through the center of four (4) perforations, second pitch diameter intersects through the center of eight (8) perforations, third pitch diameter intersects through the center of four (4) perforations, fourth pitch diameter intersects through the center of eight (8) perforations, and fifth pitch diameter intersects through the center of seven (7) perforations. Perforation 458 is angularly located at the location of an eighth perforation for the fifth pitch diameter 450, but the perforation 458 has been positioned at a greater radial distance from center point 405 so that the circumference of perforation 458 touches (*i*.*e*. is tangential to) pipeline diameter line 460. Pipeline diameter line 460 corresponds to the inner diameter of the pipewall, with the area outside the pipeline diameter present to assist in installation. Figure 5A shows an outline view of plate 400, pipeline diameter 460, and perforation 458. In this view, the flow conditioner has been rotated so that upon installation, perforation 458 is at the bottom of the pipeline and will therefore allow stratified liquid flow to pass unhindered. Of course, the rotation of the flow conditioner could occur either before or after the flow conditioner is aligned with the pipeline.

The placement of perforation 458 at the pipeline diameter 460 results in improved performance for the flow conditioner. Because the perforation 458 is at the pipeline diameter 460, proper placement and rotation of the perforated plate 400 allows fluid (such as liquid in a predominantly gaseous flow) to travel through the perforation without a damming up against the face of the flow conditioner. This prevents the measurement error believed to result from even a small amount of liquid building up and pooling against the flow conditioner. Likewise, this flow conditioner can be used when the fluid flow is predominantly liquid, and a stratified flow of gas is present in the flow stream.

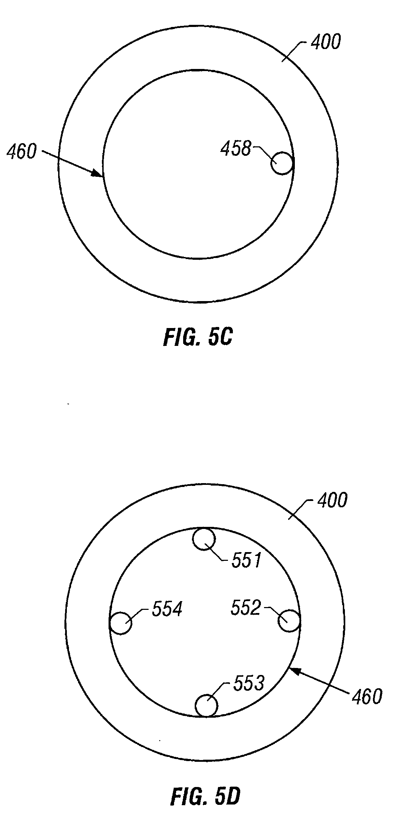

Figure 5B shows an outline view of plate 400, pipeline diameter 460, and perforation 458. In this view, the flow conditioner has been rotated so that upon installation, perforation 458 is at the top of the pipeline and will therefore allow stratified gas flow to pass unhindered. The perforation 458 may also be rotated so that it is at a side of the pipeline, the possible location of a stratified flow around a curve or bend in the pipeline, as shown in Figure 5C. Figure 5D shows a plate 400 with four perforations 551-554 at the pipeline diameter 460. These four perforations 551-554 replace four of the perforations corresponding to the fifth pitch diameter 450. Alternately, four of the perforations 551-554 on the fifth pitch diameter can be thought of as having been "moved" out to touch or intersect the pipeline diameter 460. Referring to Figure 5E, it also is possible to "move" one or more perforations out radially even farther to form a half-moon shape, for example, with respect to the pipeline diameter. It is believed that maintenance of the cross-section inside the pipeline diameter for the perforation or hole will result in the least disruption of the flow conditioning attribute of the flow conditioner. As a result, a larger diameter perforation may be used if only a portion of a full circle perforation is within the pipeline diameter 460. For ease of manufacturing, the full circle of the perforation may be drilled in the plate 400, nonetheless, with only a portion of the perforation or dill hole extending within the pipeline diameter 460. It should be noted that perforation 465 does not necessarily need to be a circle, but this shape is generally preferable because of ease of manufacture. Of course, any perforation may be chamfered or otherwise shaped. A plurality of holes, for example, may be manufactured to touch or otherwise intersect the pipeline pitch diameter to form a "ring" of drain holes around the periphery of the pipeline. Further, not only do these modifications eliminate the problem of fluid build up and pooling, but the same improvements to measurement accuracy (*e.g.* 0.4% to 0.3%) present previously will also result with the modified design of Figures 5A-5E (if the modified flow conditioner design is calibrated in situ with a flow meter).

Care must be taken, however, not to disrupt unduly the flow conditioning of any particular known flow conditioner by excessive movement of plate perforations or the like. For example, the embodiment of Figure 4 is a variation on the known Zanker flow conditioner design. Of course, re-designs to account for movement of the holes are also possible.

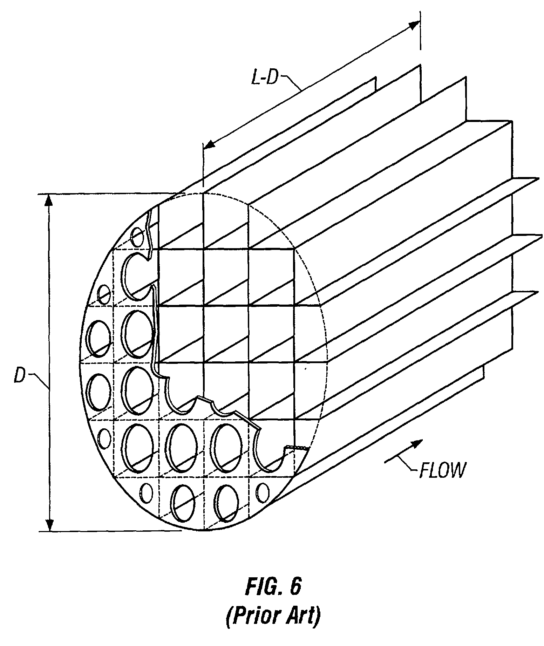

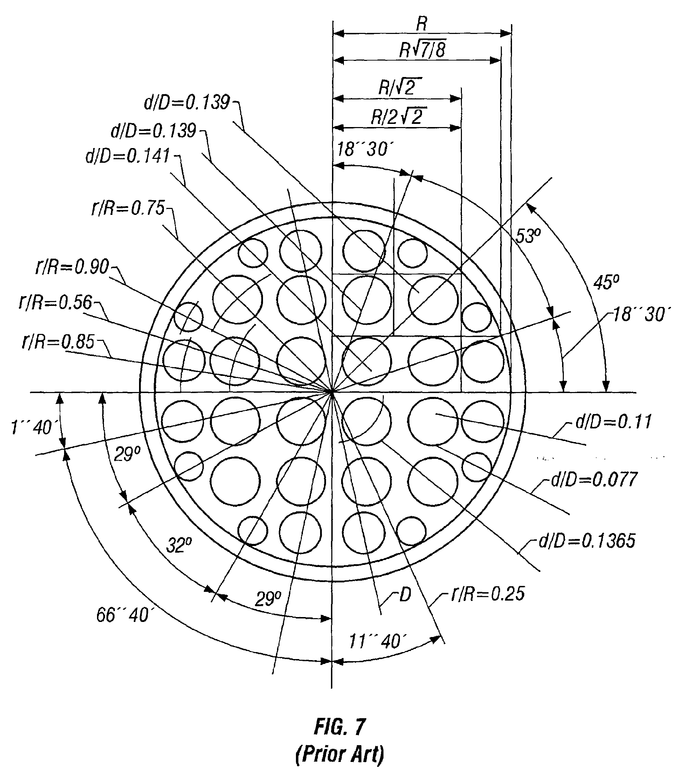

Figure 6 illustrates the Zanker design developed in 1959-60 by one of the instant inventors, and was specifically designed to produce fully developed flow conditions within a short downstream settling length. The device consists of a graded resistance perforated plate followed by a rectangular honeycomb structure that was intended to reduce turbulence and remove swirl. The perforated plate included 32 holes that were centered on a square pattern to match the honeycomb. The diameters of the holes were specially selected with different diameters, as shown in Figure 7.

In 1980, the Zanker flow conditioner was included in ISO 5167, which is the international standard on pressure differential devices, as an approval device for conditioning fluid flow. ISO 5167 describes the honeycomb section as one diameter in length, and the perforated plate as thin as possible while achieving adequate strength.

Work by Laws in the early 1980's established that the honeycomb section could be eliminated if the plate itself was made thicker. Based on this testing, Laws concluded that when the Zanker perforated plate has a depth of the order of one eighth of a pipe diameter or greater, the perforated plate alone is a good flow conditioner, reducing swirl to ISO 5167 limits and giving a comparable flow quality to that produced by the plate and honeycomb combination. The pitch circle diameter (pcd), hole diameter (D), number of holes (N), and porosity (P) of each of the arrays is given in Table I in dimensionless terms:

**TABLE I:**

| **ZANKER THICK PLATE VALUES** | | | | |
|---|---|---|---|---|
| **Array** | **Pcd** | **D** | **N** | **P** |
| **1** | **.25** | **.141** | **4** | **.0795** |
| **2** | **.56** | **.139** | **8** | **.1545** |
| **3** | **.75** | **.1365** | **4** | **.0745** |
| **4** | **.85** | **.110** | **8** | **.0968** |
| **5** | **.90 (if not moved)** | **.077** | **8** | **.0474** |

As can be appreciated, the total porosity of the Zanker thick plate is about 45%, with the porosity of all eight holes at the fifth pitch diameter being 4.74%. A single one of these holes corresponds to a porosity of only 0.59%, which is a very small contribution to the total porosity of the perforated plate 400. Thus, re-location of a single hole or perforation in the fifth array to touch or intersect the pipeline diameter is not expected to make a significant impact on the flow conditioning of the design, both because the porosity of a single hole is so small and because the porosity is only being moved - in this example it does not change. In fact, the effect of moving a single hole slightly is so small that it is expected that four or more holes of the fifth array could be moved to touch or intersect the pipeline diameter 460 without significant impact on the flow conditioning of the plate 400. Similarly, it is expected that one hole of the fourth array could be moved to a greater pitch diameter without significantly affecting the performance of the flow conditioner. This is particularly true since the gas flow velocity at the periphery of the conditioner is lower than at the center of the conditioner.

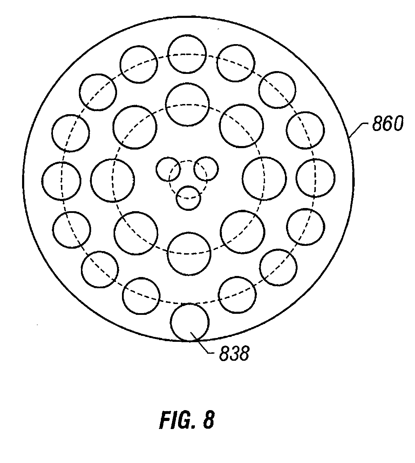

The re-location of holes on a perforated plate to result in flow access for a stratified flow of fluid while at the same time minimizing any negative effects from this movement is not limited to the Zanker design. For example, the Gallagher flow conditioner as disclosed in U.S. patent no. 5,529,093 (hereby incorporated by reference for all purposes) is described at col. 1, line 12 as relating only to single phase fluids. But it could be modified for contaminated flow according to the instant invention by provision of an access hole for stratified flow as shown in Figure 8.

An important aspect of the invention is the understanding that measurement inefficiency arises with numerous known flow conditioners in a contaminated flow because they are calibrated with respect to only a one phase-flow, and thus a pool of liquid (or in some cases, a pool of gas at the top of the pipeline) in front of the flow meter is not taken into consideration. This pool changes the effect of these flow conditioners on the fluid flow and this unexpected change in fluid flow results in a measurement error. Where two flow conditioners are used, a buildup of liquid or gas (as the case may be) also reduces the cross-section of the pipe, leading to serious errors over the long term. In contrast, by placement of holes or perforations at the pipeline diameter, the effect of the flow conditioner on the fluid flow remains relatively constant, whether the flow is a one-phase or a contaminated flow (because small amounts of liquid, for example, are permitted to flow through the flow conditioner unimpeded). It also allows the liquid or gas to avoid build up between two flow conditioners. That the flow characteristics of the flow conditioner may be changed is of relatively minor importance because calibration of the flow conditioner in conjunction with the flow meter by its nature takes this into account. Even if the "movement" of the holes is more severe, and therefore the gas flow downstream of the flow conditioner does not achieve fully developed flow as quickly, the calibration of the flow conditioner and the flow meter together dictates that this error will be taken into account. Alternately, if for example the flow conditioner is not calibrated in conjunction with the flow meter and the operator wishes to be cautious, the modified flow conditioner may be placed slightly further upstream from the flow meter than the unmodified design to ensure that a fully developed flow is present at the flow meter.

While preferred embodiments of this invention have been shown and described, other modifications thereof can also be made by one skilled in the art without departing from the spirit or teaching of this invention. The embodiments described herein are exemplary only and are not limiting. Many variations and modifications of the system and apparatus are possible and are within the scope of the invention. Accordingly, the scope of protection is not limited to the embodiments described herein, but is only limited by the claims which follow, the scope of which shall include all equivalents of the subject matter of the claims.

## Claims

1. A flow conditioner suitable for insertion into a pipeline, said flow conditioner comprising:
a plate having a face, a center point, and a pipeline pitch diameter with respect to said center point, said pipeline pitch diameter of said plate corresponding to the diameter of said pipeline;
a plurality of holes through the face of said plate, said holes being suitable to condition the flow of fluid there through;
at least one of said plurality of holes intersecting said pipeline pitch diameter.

2. The flow conditioner of claim 1, wherein said plurality of holes are circular.

3. The flow conditioner of claim 1, wherein said plate includes at least two holes whose approximate centers are at a first pitch diameter.

4. The flow conditioner of claim 3, wherein said plate includes two holes whose approximate centers are at a second pitch diameter.

5. The flow conditioner of claim 1, wherein said plate has a thickness, said thickness being at least about an eighth of a pipeline diameter.

6. The flow conditioner of claim 1, wherein two holes intersect said pipeline pitch diameter.

7. The flow conditioner of claim 1, wherein three holes intersect said pipeline pitch diameter.

8. The flow conditioner of claim 1, wherein four holes intersect said pipeline pitch diameter.

9. The flow conditioner of claim 1, wherein one hole is tangential to said pipeline pitch diameter.

10. The flow conditioner of claim 1, further comprising:
a first pitch diameter with respect to said center point, said first pitch diameter different from said pipeline pitch diameter, the approximate centers of a plurality of holes intersecting said first pitch diameter.

11. The flow conditioner of claim 10, further comprising:
a second pitch diameter with respect to said center point, said second pitch diameter different from said pipeline pitch diameter, the approximate centers of a plurality of holes intersecting said second pitch diameter.

12. The flow conditioner of claim 11, further comprising:
a third pitch diameter with respect to said center point, said third pitch diameter different from said pipeline pitch diameter, the approximate centers of a plurality of holes intersecting said third pitch diameter.

13. The flow conditioner of claim 12, further comprising:
a fourth pitch diameter with respect to said center point, said fourth pitch diameter different from said pipeline pitch diameter, the approximate centers of a plurality of holes intersecting said fourth pitch diameter; and
a fifth pitch diameter with respect to said center point, said fifth pitch diameter different from said pipeline pitch diameter, the approximate centers of a plurality of holes intersecting said fifth pitch diameter.

14. A flow conditioner for placement in a pipeline, comprising:
means for conditioning a first fluid flowing through a pipeline to achieve a fully developed flow;
communication means for passing a second fluid from an upstream side of said flow conditioner to a downstream side of said flow conditioner, said communication means being located proximate to a wall of said pipeline.

15. A method of installing a flow conditioner, comprising:
a) positioning a flow conditioner in a pipeline, said pipeline having a pipeline diameter and said flow conditioner having at least one passage to allow fluid flow therethrough, said at least one passage intersecting said pipeline diameter;
b) rotating said flow conditioner to place said at least one passage at a predetermined angular position with respect to said pipeline.

16. The method of installing a flow conditioner of claim 15, wherein said flow conditioner is a plate.

17. The method of claim 15, wherein said flow conditioner includes a plate.

18. The method of claim 15, wherein said flow conditioner is positioned upstream of a flow meter, and said flow conditioner generates at least a nearly-fully developed flow for measurement by said flow meter.

19. The method of claim 15, wherein said passage is a hole in a plate.

20. The method of claim 15, wherein said flow conditioner is positioned on a first side of a flow meter.

21. The method of claim 20, further comprising:
c) positioning a second flow conditioner in said pipeline on a second side of said flow meter, said second flow conditioner having at least one passage to allow fluid flow therethrough, said at least one passage of said second flow conditioner intersecting said pipeline diameter;
d) rotating said second flow conditioner to place said at least one passage of said second flow conditioner at a second predetermined angular position with respect to said pipeline.
